# FASCICULE DE BREVET EUROPEEN

(11) **EP 3 015 362 B1**
(45) Date de publication et mention de la délivrance du brevet: **07.12.2016**
(21) Numéro de dépôt: 15191073.4
(22) Date de dépôt: 22.10.2015
(51) Int. Cl.: B64C 7/00, B64C 27/02, B64C 27/04

(54) **CARENAGE DE SOMMET D'UN GIRAVION EQUIPE D'UN ORGANE MOBILE DE GUIDAGE DU FLUX D'AIR S'ECOULANT VERS L'ARRIERE DU GIRAVION**
VERKLEIDUNG DER SPITZE EINES DREHFLÜGELFLUGZEUGS, DIE MIT EINEM BEWEGLICHEN FÜHRUNGSORGAN FÜR DEN ZUR RÜCKSEITE DES DREHFLÜGELFLUGZEUGS ABZUFÜHRENDEN LUFTSTROMS AUSGESTATTET IST
A ROTORCRAFT TOP FAIRING FITTED WITH A MOVABLE MEMBER FOR GUIDING A STREAM OF AIR FLOWING TOWARDS THE REAR OF THE ROTORCRAFT

(30) Priorité: 31.10.2014 FR 1402463
(43) Date de publication de la demande: 04.05.2016
(73) Titulaire: Airbus Helicopters, 13725 Marignane Cedex (FR)
(72) Inventeur: Alfano, David, 13090 Aix en Provence (FR)
(74) Mandataire: GPI & Associés

(56) Documents cités:
- US-A- 3 130 942
- US-A1- 2011 036 954

## Description

La présente invention est du domaine des moyens permettant d'influencer l'écoulement d'air sur les surfaces extérieures des giravions. La présente invention relève plus particulièrement d'un carénage classiquement ménagé au sommet d'un giravion en étant disposé sous la voilure tournante d'un rotor principal à axe sensiblement vertical et en rehausse d'un capot enveloppant un groupe de motorisation du giravion.

Un giravion est un aéronef à voilure(s) tournante(s) comportant un ou plusieurs rotors, dont au moins un rotor principal à axe sensiblement vertical disposé au sommet du giravion. Le rotor principal procure typiquement au moins la sustentation du giravion, voire aussi dans le cas spécifique d'un hélicoptère sa propulsion et/ou son guidage suivant ses axes de progression.

Un giravion est aussi potentiellement équipé d'au moins un rotor annexe à axe sensiblement horizontal. Classiquement, un tel rotor annexe peut être installé à l'extrémité d'une poutre de queue pour contrôler l'attitude du giravion en lacet. Un tel rotor annexe peut aussi être exploité pour former une hélice propulsive du giravion en translation dans le cas d'un hélicoptère à vitesses élevées de propulsion en translation.

Le ou les rotors équipant un giravion sont classiquement entraînés en rotation par un groupe de motorisation comprenant au moins un moteur à combustion, turbomoteur notamment. Le groupe de motorisation est typiquement implanté en partie haute du giravion en contrebas de la voilure du rotor principal. Un capot est ménagé autour du groupe de motorisation pour orienter l'écoulement d'air vers l'arrière du giravion et favoriser les caractéristiques aérodynamiques du giravion.

Un tel capot est couramment rehaussé par un carénage enveloppant un mécanisme de manoeuvre des pales de la voilure du rotor principal selon des commandes de vol générées par un pilote du giravion. Un tel carénage est couramment dénommé « cheminée » ou en langue anglaise « hub fairing » ou « pylone ».

A titre d'exemple, un tel mécanisme de manoeuvre des pales de la voilure du rotor principal est couramment formé d'un couple de plateaux montés mobiles sur un mât porteur de la voilure. Les plateaux sont manoeuvrables par un pilote du giravion selon diverses lignes de commande pour faire varier collectivement et/ou cycliquement le pas des pales de la voilure du rotor principal afin de modifier l'attitude du giravion.

Le capot et le carénage qui le rehausse s'étendent principalement suivant une dimension longitudinale d'extension du giravion classiquement considérée entre l'avant et l'arrière du giravion au sol.

Bien évidemment, les notions de « sommet », de « partie haute », de « contrebas », de « bas » ou de « rehausse » par exemple, sont communément comprises au regard de l'orientation verticale du giravion au sol. De même les notions de « plan vertical » et de « plan horizontal » du giravion sont communément admises au regard des orientations générales respectivement verticale et horizontale définissant l'extension du giravion considéré posé au sol.

Dans ce contexte, il est opportun d'agencer le carénage pour permettre au mieux de réduire sa trainée aérodynamique et de limiter le sillage qu'il génère. L'agencement du carénage doit notamment favoriser l'adhérence du flux d'air le long de sa surface ainsi que le long de la surface du capot ménagé autour du groupe de motorisation surplombé par le carénage.

Par ailleurs, il est aussi opportun d'agencer le carénage pour minimiser son sillage, pour stabiliser son sillage en fonction des cas de vol, et pour éviter la génération d'excitations structurelles des parois extérieures du giravion, notamment les parois s'étendant à l'arrière du giravion telles que les parois de la poutre de queue et les parois ménageant des surfaces aérodynamiques stabilisatrices.

Telle que décrite dans les documents US 3 130 942 et US 2011/0036954, une solution courante consiste à conformer en goutte d'eau le profil du carénage considéré dans un plan horizontal du giravion. Il est cependant apparu qu'une telle solution n'était pas pleinement satisfaisante pour optimiser la stabilisation du giravion en cas de vent latéral et/ou en cas de dérapage du giravion en lacet, notamment en ce qui concerne les giravions légers pour lesquels il est recherché de favoriser leur manoeuvrabilité en vol.

Plus particulièrement parmi les contraintes relatives à l'agencement du carénage, la qualité de vol du giravion doit être préservée. Il est notamment à éviter que l'écoulement d'air le long du carénage provoque des instabilités de tenue de trajectoire et/ou ne perturbe le contrôle de l'attitude en lacet du giravion.

Il apparait que lorsque les flux d'air entourant le giravion comportent une composante vectorielle latérale significative, la régularité de l'écoulement des dits tourbillons vers l'arrière du carénage est perturbée et par suite la stabilité de l'attitude du giravion en lacet en est affectée. Plus particulièrement, les tourbillons générés à l'extrémité arrière du carénage tendent à devenir chaotiques avec un étalement fréquentiel et tendent également à se déplacer vers l'arrière, impactant potentiellement les parties aérodynamiques arrière.

Une telle instabilité d'écoulement des tourbillons, favorisée en cas de vent latéral et/ou en cas de dérapage du giravion en lacet, a pour effet de produire des vibrations inopportunes vis-à-vis de la résistance mécanique du giravion et vis-à-vis du confort des passagers. De surcroît, une telle situation tend à déstabiliser le comportement en lacet du giravion.

Pour pallier ces inconvénients, il est connu de tronquer transversalement le profil en goutte d'eau du carénage à son extrémité arrière. Ces dispositions sont telles qu'en cas de vent latéral et/ou en cas de dérapage en lacet, la régularité de l'écoulement des tourbillons en est améliorée. Cependant, un tel aménagement du bord de fuite du carénage tend à augmenter sa traînée aérodynamique, ce qui n'est pas souhaitable.

Il apparaît finalement que divers aménagements spécifiques de la conformation du carénage visant à améliorer l'écoulement de l'air pour certains cas de vol sont inadaptés pour d'autres cas de vol. Il en ressort que des compromis doivent être trouvés entre divers aménagements du carénage pour procurer au mieux un écoulement d'air satisfaisant quels que soient les cas de vol du giravion.

Par ailleurs il est connu d'agencer en un plan incliné, par rapport au plan horizontal du giravion, la paroi arrière du carénage formé par la troncature de son profil en goutte d'eau. De telles dispositions visent à favoriser un guidage de l'écoulement d'air le long du carénage vers le bas du giravion, en rappelant que la rotation du rotor principal est génératrice en elle-même d'un puissant flux d'air orienté vers le bas du giravion et de phénomènes aérodynamiques complexes perturbant la stabilité du comportement du giravion en vol.

En conséquence, il est souhaitable que l'agencement global et les aménagements spécifiques du carénage vis-à-vis de l'écoulement d'air le long de ses surfaces prennent aussi en compte le souffle généré par le rotor principal.

Aussi mineurs soient-ils, les divers aménagements du carénage visant à influencer l'écoulement d'air le long de ses surfaces et par suite le long des organes disposés à l'arrière du giravion, interfèrent en combinaison entre eux sur les conditions globales d'un tel écoulement et de ses effets.

En conséquence, des choix doivent être faits en ce qui concerne l'exploitation isolée et/ou conjointe des divers aménagements du carénage pour procurer un écoulement d'air vers l'arrière du giravion jugé au mieux satisfaisant.

En outre, il est souhaitable que l'agencement du carénage soit exploitable sans modification majeure quelle que soit la configuration générale du giravion, afin d'éviter d'élaborer une conformation spécifique du carénage selon la structure générale du giravion qui varie entre diverses familles de giravions.

Il en ressort une recherche constante d'une organisation du carénage favorisant un écoulement d'air le long de sa surface extérieure procurant des résultats au mieux satisfaisants vis-à-vis des diverses contraintes et exigences précédemment mentionnées.

La présente invention s'inscrit dans le cadre d'une telle recherche et vise à proposer un giravion comportant un carénage du type susvisé ménagé au sommet du giravion, organisé pour procurer un écoulement d'air vers l'arrière du giravion répondant de manière satisfaisante aux divers problèmes posés précédemment mentionnés.

Le giravion de la présente invention est muni à son sommet d'un carénage longitudinalement étendu suivant l'orientation longitudinale d'extension du giravion classiquement définie entre l'avant et l'arrière du giravion considéré posé au sol.

Ledit carénage enveloppe typiquement un mécanisme de manoeuvre par un pilote du giravion des pales d'un rotor principal à axe sensiblement vertical procurant au moins la sustentation du giravion, en étant ménagé en contrebas de la voilure du rotor principal et en rehausse d'un capot enveloppant un groupe de motorisation du giravion.

Selon l'invention, le profil du carénage considéré dans un plan horizontal du giravion est plus particulièrement conformé en goutte d'eau tronquée avec une extrémité arrière comportant transversalement indifféremment une troncature et/ou un plan incliné orienté perpendiculairement audit plan horizontal du giravion, ménageant deux bords de fuite latéraux du carénage favorisant la régularité de l'écoulement d'air vers l'arrière du giravion.

Le giravion de la présente invention est principalement reconnaissable en ce que les deux bords de fuite du carénage sont chacun munis d'au moins un organe mobile comportant un degré de liberté en rotation par rapport au carénage le long des deux bords de fuite, un tel organe mobile guidant l'échappée, aux bords de fuite du carénage vers l'arrière du giravion en vol, d'un premier flux d'air s'écoulant le long du carénage.

Le guidage du premier flux d'air par l'organe mobile permet de dévier le premier flux d'air vers les côtés latéraux du giravion pour éviter un écoulement du premier flux d'air vers l'arrière du giravion suivant son orientation longitudinale d'extension.

Ces dispositions permettent finalement de dévier les éventuels phénomènes d'instabilité aérodynamique, phénomènes tourbillonnaires notamment, typiquement générés par l'échappée du premier flux d'air aux bords de fuite du carénage, et par suite permettent finalement d'éviter des perturbations induites par le premier flux d'air sur l'écoulement de l'air le long des parois arrière du giravion situées en aval du carénage dans le sens d'écoulement du premier flux d'air.

Plus particulièrement, le guidage du premier flux d'air vers l'arrière du giravion est avantageusement opéré par suite d'une manoeuvre de l'organe mobile en fonction des effets produits par ledit premier flux d'air sur l'écoulement de l'air le long des parois extérieures arrière du giravion situées en aval du carénage dans le sens d'écoulement du premier flux d'air, tel que le long d'une poutre de queue et/ou d'un empennage arrière équipant le giravion.

Selon la démarche de la présente invention, il est à prendre en considération que les aménagements aérodynamiques du carénage sont traditionnellement des aménagements de forme qui sont statiques. Cependant, les solutions fondées sur de tels aménagements de forme du carénage pour limiter les effets du flux d'air s'échappant du carénage vers l'arrière du giravion reposent sur un compromis prenant en compte différents cas de vol du giravion.

En effet selon l'approche habituelle d'aménagement de forme du carénage, de tels aménagements de forme sont généralement efficaces pour des cas de vol donnés du giravion, au détriment de leur efficacité pour d'autre cas de vol du giravion.

En outre, il est à relever que de tels aménagements de forme du carénage sont couramment définis pour un giravion de structure générale donnée et doivent être adaptés, voire être profondément modifiés, pour des giravions de structures générales différentes, notamment vis-à-vis de leur conformation générale et de la puissance mécanique fournie par le groupe de motorisation.

La démarche de l'invention est fondée sur un contrôle inhabituel de l'échappée vers l'arrière du giravion du flux d'air s'écoulant le long du carénage, au moyen d'un dispositif de guidage dudit premier flux d'air s'échappant du carénage vers l'arrière du giravion, mettant en oeuvre deux organes mobiles.

Ledit contrôle de l'échappée vers l'arrière du giravion du flux d'air s'écoulant le long du carénage est potentiellement un contrôle passif résultant d'une manoeuvre des organes mobiles sous l'effet de sa prise au vent.

Ledit contrôle de l'échappée vers l'arrière du giravion du flux d'air s'écoulant le long du carénage est potentiellement encore un contrôle actif procurant un guidage contrôlé dudit premier flux d'air. Un tel contrôle actif est avantageusement procuré à partir d'une manoeuvre des organes mobiles par une motorisation dont la mise en oeuvre est provoquée en fonction des perturbations aérodynamiques subies par lesdites parois extérieures arrière du giravion identifiées par une instrumentation de bord du giravion.

Ainsi selon une définition générale de la présente invention, chacun des deux bords de fuite latéraux dudit carénage équipant le giravion est muni d'au moins un organe mobile comportant un degré de liberté en rotation par rapport au carénage le long des deux bords de fuite. Les organes mobiles permettent alors de guider un premier flux d'air s'écoulant le long du carénage et s'échappant d'un des deux bords de fuite vers l'arrière du giravion en vol.

Selon une forme de réalisation, chacun des organes mobiles est montée libre en mobilité le long d'un des deux bords de fuite du carénage, de sorte que le guidage aux bords de fuite du carénage dudit premier flux d'air vers l'arrière du giravion en vol est spontanément provoqué sous l'effet de la prise au vent des deux organes mobiles.

Selon une forme plus perfectionnée de réalisation, chacun des organes mobiles est de préférence motorisé en étant manoeuvrable par un moteur dont la mise en oeuvre est placée sous dépendance d'informations fournies par l'instrumentation de bord du giravion et relatives au comportement en vol du giravion.

Lesdites informations fournies par l'instrumentation de bord sont des informations identifiant notamment les perturbations aérodynamiques subies par lesdites parois extérieures arrière du giravion sous l'effet de l'échappée du premier flux d'air aux bords de fuite du carénage.

Dans le cas où chaque organe mobile est motorisé, l'organe mobile est manoeuvrable par un moteur dont la mise en oeuvre est régulée par des moyens de commande en fonction d'informations fournies par l'instrumentation de bord du giravion plus particulièrement relatives aux effets produits par le premier flux d'air sur l'écoulement d'un deuxième flux d'air le long d'au moins une paroi extérieure arrière du giravion considérée en aval du carénage dans le sens d'écoulement dudit premier flux d'air.

Selon une forme préférée de réalisation en cas d'une motorisation de l'organe mobile, le moteur est équipé d'un mécanisme d'embrayage-débrayage dont la mise en oeuvre est placée sous la dépendance d'un ordre de débrayage généré par un organe de commande activable par un homme, pilote du giravion notamment. En cas de débrayage de la motorisation commandée par l'homme, l'organe mobile est alors spontanément manoeuvré sous l'effet de sa prise au vent.

Il se pose alors diverses difficultés à surmonter et des choix doivent être faits en conséquence pour organiser ledit dispositif de guidage contrôlé du premier flux d'air lors de son échappée du carénage vers l'arrière du giravion.

Une difficulté à surmonter relève de l'organisation structurelle et/ou de la conformation propre de l'organe mobile dont l'agencement doit favoriser le guidage dynamique recherché du premier flux d'air aux bords de fuite du carénage.

En outre, l'éventuelle motorisation du dit organe mobile et ledit organe mobile lui-même doivent pouvoir être facilement implantés à bord du giravion en évitant d'accroître outre mesure la masse du giravion et/ou de perturber l'écoulement du premier flux d'air le long du carénage, en évitant surtout de perturber l'écoulement d'air le long des parois extérieures du giravion.

Selon une forme simple de réalisation, il est proposé d'agencer ledit organe mobile en volet articulé en pivotement sur le carénage le long d'un des deux bords de fuite.

Un tel volet peut être aisément motorisé selon des fréquences d'actionnement correspondantes aux fréquences de variation des mouvements globaux du giravion en vol, voire à des fréquences supérieures d'actionnement de l'organe mobile identifiées selon le nombre de pales et la vitesse d'entraînement en rotation du rotor principal.

Cependant, il est apparu qu'une telle solution méritait d'être améliorée pour optimiser la dynamique et l'efficacité recherchées du guidage du premier flux d'air vers l'arrière du giravion.

C'est pourquoi selon une forme astucieuse de réalisation, ledit organe mobile est agencé en rouleau à aubes monté tournant sur le carénage le long d'un des deux bords de fuite. Ledit rouleau à aubes est de préférence motorisé en étant manoeuvré par ledit moteur conformément à une régulation par les moyens de commande du sens et de la vitesse d'entraînement en rotation dudit rouleau à aubes.

Selon diverses variantes de réalisation, les aubes dudit rouleau à aubes sont potentiellement :
-) orientées parallèlement à un axe de rotation du rouleau à aubes, ou
-) agencées en hélice enroulée autour d'un axe de rotation du rouleau à aubes pour procurer au besoin un déphasage temporel du guidage dudit premier flux d'air entre les extrémités axiales du rouleau à aubes suivant son axe de rotation.

Par ailleurs, le dit organe mobile est potentiellement un organe monobloc suivant son axe de rotation. La notion de « monobloc » est à comprendre comme conférant un agencement monolithique de l'organe mobile selon lequel sa surface de guidage du premier flux d'air est conjointement mobile en tout point entre les extrémités de l'organe mobile considérées suivant son axe de rotation.

Selon une variante, ledit organe mobile est subdivisé en tronçons successifs suivant son axe de rotation, lesdits tronçons étant individuellement montés mobiles le long d'un des deux bords de fuite du carénage.

En ce qui concerne l'implantation de la motorisation de l'organe mobile, celle-ci est judicieusement logée dans le volume intérieur du carénage pour éviter toute perturbation par ladite motorisation de l'écoulement du premier flux d'air le long du carénage.

Plus particulièrement selon une forme judicieuse de réalisation, une motorisation de l'organe mobile comprenant ledit moteur et une chaîne cinématique de transmission de mouvements interposée entre le moteur et l'organe mobile, est avantageusement logée à l'intérieur du carénage.

Une autre difficulté réside alors dans le choix de la zone arrière du giravion prise en considération pour évaluer l'influence dudit premier flux d'air sur ledit deuxième flux d'air. La paroi extérieure arrière du giravion doit être choisie non seulement comme représentative de ladite influence, notamment en ce qui concerne la stabilité du comportement en lacet du giravion, mais aussi de sorte que ladite influence puisse être évaluée au mieux par l'instrumentation de bord équipant couramment les giravions, en limitant voire en évitant l'adjonction d'instruments de bord supplémentaires.

Pour surmonter cette difficulté, il est pris en considération le fait que les giravions sont classiquement équipés d'au moins un empennage arrière de stabilisation de l'attitude en vol du giravion, tel que notamment une dérive arrière disposée suivant l'orientation longitudinale d'extension du giravion pour favoriser la stabilisation en lacet du giravion.

Dans ce contexte, il est de préférence choisi de prendre en compte les effets produits par le premier flux d'air spécifiquement sur l'écoulement d'air le long de l'empennage arrière.

Plus particulièrement, le giravion étant classiquement équipé d'un empennage arrière, il est fait le choix de placer la mise en oeuvre de l'organe mobile par le moteur sous la dépendance des effets produits par le premier flux d'air sur un dit deuxième flux d'air s'écoulant le long de l'empennage arrière.

Bien entendu, un tel choix n'exclue pas la possibilité de prendre en considération, isolément ou en combinaison, d'autres parois extérieures arrière du giravion pour évaluer les effets produits par le premier flux d'air sur un quelconque deuxième flux d'air s'écoulant en zone arrière du giravion.

Une autre difficulté à surmonter relève de l'organisation des moyens de commande, procurant de préférence une régulation automatisée de la manoeuvre de l'organe mobile par le moteur. Cependant, il est aussi fait le choix qu'une telle régulation automatisée, dispensant le pilote du giravion d'une tâche supplémentaire, soit obtenue fiable et efficace sans pour autant induire un risque de désagrément pour le pilote.

C'est pourquoi, les moyens de commande comprennent de préférence un calculateur de régulation automatisée dudit moteur en fonction desdites informations fournies aux moyens de commande par l'instrumentation de bord du giravion.

De préférence encore, les moyens de commande comprennent néanmoins un moyen de régulation dudit moteur en fonction d'ordres de commande fournis par un organe manuel de commande activable par un personnel d'équipage du giravion, pilote du giravion notamment.

En effet, le pilote du giravion est potentiellement apte à évaluer par ressenti l'influence du premier flux d'air sur l'écoulement d'air le long de la zone arrière du giravion. En outre, ledit organe manuel de commande peut être exploité pour interrompre le contrôle automatique de la manoeuvre de l'organe mobile par ledit calculateur.

Il est en cela à considérer que les ordres de commande générés par l'équipage du giravion sont à exécution prioritaire vis-à-vis de consignes potentiellement générées simultanément par ledit calculateur de régulation automatisée du moteur.

Il se pose encore la difficulté des modalités mises en oeuvre pour évaluer les effets produits par le premier flux d'air sur le deuxième flux d'air. Il est à noter à ce propos que le choix fait de prendre en considération un dit deuxième flux d'air s'écoulant le long d'un empennage arrière prend en compte une telle difficulté.

En effet pour surmonter cette difficulté, lesdites informations fournies aux moyens de commande par l'instrumentation de bord du giravion comprennent avantageusement au moins une première information relative aux mouvements vibratoires propres d'un empennage arrière du giravion, notamment au niveau d'un plan vertical ou incliné d'une dérive arrière.

Il est bien évidemment compris qu'un tel empennage arrière, tel que notamment ladite dérive arrière, est classiquement disposé à bord d'un giravion en aval du carénage suivant le sens d'écoulement du premier flux d'air. Lesdits mouvements vibratoires propres dudit empennage arrière sont bien entendu considérés comme distincts des mouvements vibratoires auxquels est globalement soumis le giravion.

Plus particulièrement, ladite première information est avantageusement générée par l'instrumentation de bord à partir de données fournies par l'un quelconque au moins des groupes d'instruments de bord suivants :
-) un premier groupe d'instruments de bord, comprenant :
   *) au moins un premier accéléromètre implanté à bord du giravion, notamment en zone du centre de gravité du giravion voire encore et de préférence en zone avant du giravion, dans le poste de pilotage notamment, afin de fournir au mieux des informations significatives de l'impact de l'écoulement du premier flux d'air à l'arrière du giravion, et
   *) au moins un deuxième accéléromètre équipant un quelconque empennage arrière du giravion le long duquel s'écoule ledit deuxième flux d'air, de préférence ladite dérive arrière.
-) un deuxième groupe d'instruments de bord, comprenant au moins un gyroscope équipant le giravion et participant d'un système de contrôle actif des vibrations auxquelles est soumis le giravion, tel qu'un système connu, couramment dénommé AVCS (d'après l'acronyme en langue anglais de Active Vibration Control System). Le deuxième groupe d'instruments de bord comprend aussi au moins un troisième accéléromètre équipant un quelconque empennage arrière du giravion le long duquel s'écoule ledit deuxième flux d'air, tel que concernant ledit deuxième accéléromètre.

Selon une variante, considérée isolément ou en combinaison avec la génération de ladite première information, lesdites informations fournies par l'instrumentation de bord du giravion aux moyens de commande comprennent de préférence une deuxième information.

Ladite deuxième information est avantageusement relative à une phase de vol courante du giravion influant sur l'écoulement du premier flux d'air vers l'arrière du giravion, telle que notamment une phase d'approche du giravion vers un point de posé et/ou une prise de virage incliné par le giravion, voire encore une attitude du giravion de dérapage en lacet.

Ladite phase de vol courante du giravion est classiquement identifiée par l'instrumentation de bord du giravion à partir de données fournies par une unité de commande de vol du giravion, telle qu'un AFCS (d'après l'acronyme en langue anglaise Automatic Flight Control System) et/ou un pilote automatique par exemple. Une telle unité de commande de vol est classiquement apte à identifier la configuration de vol courante du giravion, notamment typiquement déterminée selon la mécanique de vol courante du giravion.

D'autres instruments de bord du giravion peuvent être exploités pour générer lesdites informations fournies par l'instrumentation de bord du giravion aux moyens de commande. Par exemple de tels autres instruments de bord peuvent être des capteurs de pression générant des données participant à l'identification des caractéristiques du premier flux d'air et/ou du deuxième flux d'air.

En effet, de tels capteurs de pression sont aptes à identifier une instabilité et/ou une irrégularité de l'écoulement du premier flux d'air et/ou du deuxième flux d'air

C'est pourquoi selon une forme potentielle de réalisation, le giravion est équipé de tels capteurs de pression, dont :
-) au moins un premier capteur de pression équipant le carénage et participant à l'identification des caractéristiques du premier flux d'air, ainsi que
-) au moins un deuxième capteur de pression équipant le bord d'attaque dudit empennage et participant à l'identification des caractéristiques du deuxième flux d'air.

Selon une forme de réalisation, les moyens de commande sont potentiellement des moyens de régulation du moteur selon des modes de régulation prédéfinis mis en oeuvre en fonction des informations fournies par l'instrumentation de bord du giravion.

Dans ce contexte, il est de préférence proposé de placer la mise en oeuvre de tels modes de régulation prédéfinis sous dépendance d'un système de contrôle et de correction automatique des effets qu'ils produisent sur l'écoulement du deuxième flux d'air à l'arrière du giravion en fonction d'un retour d'informations fournies par l'instrumentation de bord du giravion.

Plus particulièrement selon une forme préférée de réalisation, les moyens de commande intègrent des moyens de correction par calcul de la régulation du moteur opérée par les moyens de commande à partir des informations fournies par l'instrumentation de bord du giravion. Lesdits moyens de correction sont des moyens aptes à adapter la régulation du moteur, notamment par l'exploitation de filtres de calcul algorithmiques tels que des filtres de Kalman par exemple.

Une telle adaptation de la régulation du moteur par lesdits moyens de correction est notamment, mais non exclusivement, mise en oeuvre par suite de l'application par le calculateur desdits modes de régulation prédéfinis. Les moyens de correction adaptent la régulation du moteur en fonction de la variation des effets produits par l'organe mobile sur l'écoulement du deuxième flux d'air le long de ladite au moins une paroi extérieure arrière du giravion lors de sa manoeuvre par ladite motorisation, notamment par application desdits mode de régulation prédéfinis.

Des exemples de réalisation de la présente invention vont être décrits en relation avec les figures des planches annexées, dans lesquelles :
- la fig.1 est une illustration en vue de côté de la silhouette d'un giravion de la présente invention, muni notamment à son sommet d'un carénage selon une forme préférée de réalisation.
- la fig.2, fig.3 et fig.4 sont des illustrations de dessus de différentes formes respectives de réalisation d'un carénage équipant un giravion conformément à la présente invention.
- la fig.5 est une illustration en vue arrière du carénage représenté sur la fig.4, et
- les figures 6 et 7 sont deux représentations en perspective de différentes formes respectives de réalisation d'organes mobiles permettant de guider le flux d'air depuis le carénage en direction de l'arrière du giravion.

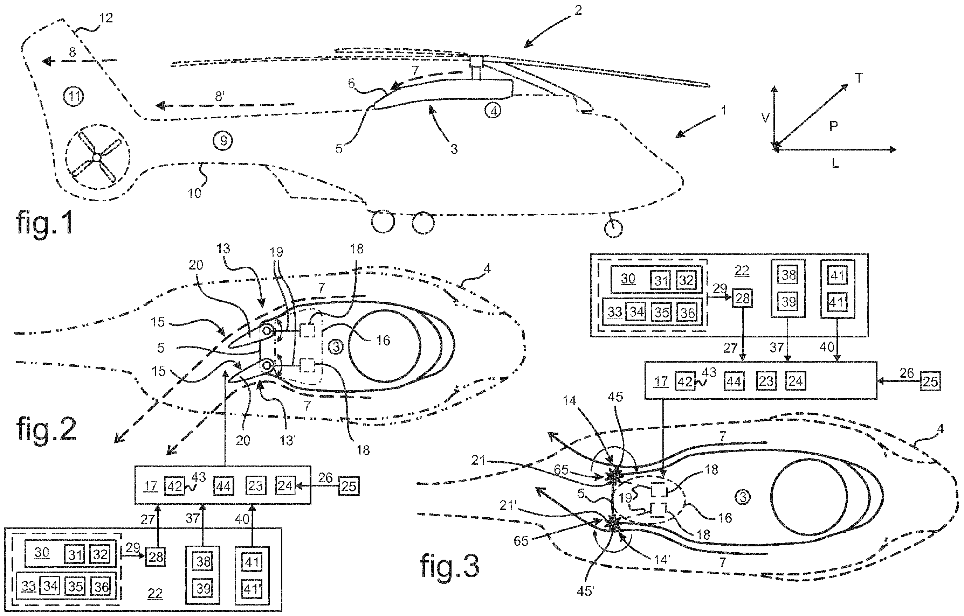

Sur la fig.1, un giravion 1 est classiquement équipé d'un rotor principal 2 à axe sensiblement vertical procurant au moins la sustentation du giravion 1, voire aussi sa propulsion et/ou son guidage suivant ses axes de progression.

Le giravion 1 est aussi équipé en partie haute au regard de son orientation verticale V d'extension, d'un groupe de motorisation fournissant au giravion 1 la puissance mécanique nécessaire à son fonctionnement, notamment au moins pour l'entraînement en rotation du rotor principal 2.

Un carénage 3 de protection d'un mécanisme de manoeuvre des pales de la voilure du rotor principal 2 est classiquement ménagé en rehausse d'un capot 4 de protection du groupe de motorisation. Ledit carénage 3 est typiquement disposé en contrebas de la voilure du rotor principal 2 en s'étendant longitudinalement suivant l'orientation longitudinale L d'extension du giravion 1, classiquement considérée entre l'avant et l'arrière du giravion 1 posé au sol. Le profil aérodynamique du carénage 3 considéré dans un plan horizontal P d'extension du giravion 1 considéré posé au sol est typiquement agencé en goutte d'eau, de préférence tronquée à l'extrémité arrière du carénage 3 orientée vers l'arrière du giravion 1.

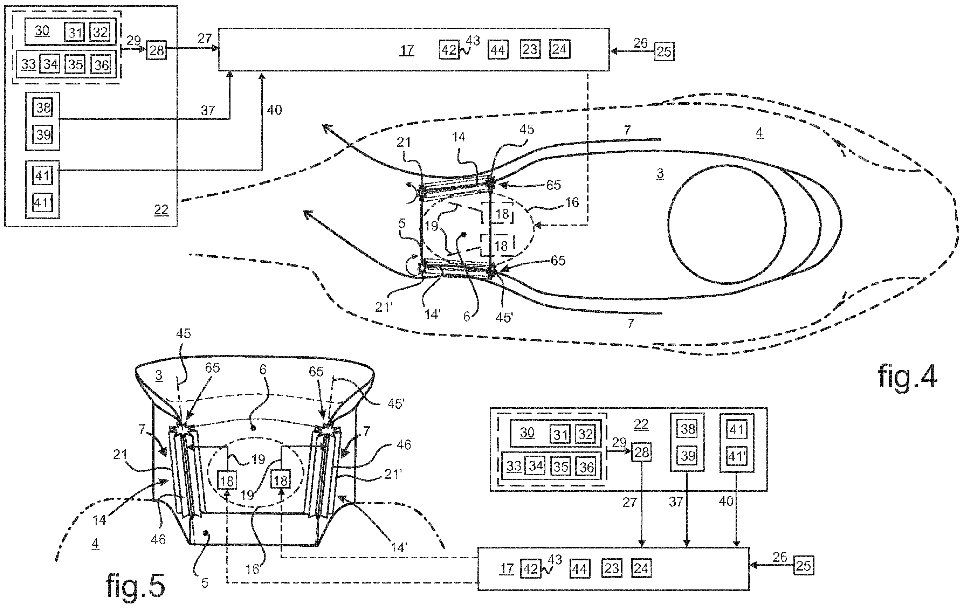

Plus particulièrement selon la forme préférée de réalisation du giravion 1 de l'invention illustrée, et tel qu'illustrée sur les fig.3, fig.4 et fig.5, la paroi arrière du carénage 3 comporte en outre une troncature 5 ménagée à l'arrière du profil en goutte d'eau du carénage 3, ladite troncature 5 s'étendant transversalement suivant l'orientation transversale T du giravion 1. En outre, tel que selon la forme préférée de réalisation illustrée sur la fig. 1 ainsi que sur les fig.4 et fig.5, la paroi arrière du carénage 3 comporte en outre un plan incliné 6 dans un dit plan horizontal P d'extension du giravion 1.

Dans ce contexte et en se reportant sur l'ensemble des fig. 1 à fig.5, il est réputé qu'un premier flux d'air 7 s'écoulant le long du carénage 3 est générateur de perturbations aérodynamiques le long des parois extérieures arrière 9,11 du giravion 1, et notamment est générateur de phénomènes tourbillonnaires s'écoulant le long desdites parois extérieures arrière 9, 11 du giravion 1.

Plus particulièrement sur la fig.1, le premier flux d'air 7 influe sur l'écoulement d'au moins un deuxième flux d'air 8, 8' le long des parois extérieures arrière 9,11 du giravion 1, telles que par exemple le long de la paroi extérieure arrière 9 d'une poutre de queue 10 du giravion 1 ou le long de la paroi extérieure arrière 11 d'une dérive d'un empennage arrière 12 du giravion 1.

Le profil en goutte d'eau tronquée du carénage 3 ménage deux bords de fuite du carénage 3 par lequel s'échappe le premier flux d'air 7 vers l'arrière du giravion 1. On relèvera que le carénage 3 comporte donc deux bords de fuite 13, 13', 14,14', par suite de la formation du plan incliné 6 et/ou de la troncature 5 ménagés à l'arrière du carénage 3, tel que sur les exemples de réalisation illustrés aux figures.1 à 5.

Dans ce contexte, il est proposé par la présente invention de guider le premier flux d'air 7 aux bords de fuite 13, 13' 14, 14' du carénage 3 pour limiter son influence sur l'écoulement d'air le long des parois extérieures arrière 9,11 du giravion 1.

Plus particulièrement il est proposé de dévier le premier flux d'air 7 s'échappant du carénage 3 vers l'un ou l'autre des côtés latéraux du giravion 1 dans la zone d'extension arrière du giravion 1 s'étendant en aval du carénage 3 dans le sens d'écoulement du premier flux d'air 7. Les côtés latéraux du giravion 1 sont communément compris comme étant les côtés du giravion 1 s'étendant suivant l'orientation longitudinale L d'extension du giravion 1 et transversalement au plan horizontal P du giravion 1.

A cet effet sur les figures 2 à 5 et 7, les bords de fuite 13, 13' 14, 14', 88, 88' du carénage 3 sont chacun munis d'un organe mobile 15, 65, 85 manoeuvrable par une motorisation 16 dont la mise en oeuvre est régulée par des moyens de commande 17. Ladite motorisation 16 est avantageusement logée dans le volume intérieur du carénage 3 et comprend notamment au moins un moteur 18 en prise sur une chaîne cinématique 19 de transmission de mouvements depuis le moteur 18 vers l'organe mobile 15, 65, 85.

Sur l'exemple de réalisation illustré sur la fig.2, ledit organe mobile 15 est plus particulièrement agencé en volet 20 monté pivotant sur les bords de fuite 13, 13' du carénage 3. Chacun des bords de fuite 13,13' du carénage 3 est ainsi équipé d'un volet 20 monobloc selon une direction longitudinale parallèle à un axe de rotation du volet 20 par rapport au carénage 3.

Dans le contexte de la forme de réalisation illustrée sur la fig.2, l'axe de pivot du volet 20 est orienté le long de chacun des bords de fuite 13, 13' du carénage 3 suivant la dimension verticale du carénage 3 s'étendant parallèlement à l'orientation verticale V d'extension du giravion.

Sur les exemples de réalisation illustrés respectivement d'une part sur la fig.3 et d'autre part sur les fig.4 et fig.5, ledit organe mobile 65 est également un organe monobloc suivant son axe de rotation 45, 45' mais est cependant agencé en rouleau à aubes 21,21', chacun des bords de fuite 14,14' du carénage 3 étant équipé d'un rouleau à aubes 21,21' propre.

De tels rouleaux à aubes 21,21' sont orientés suivant les bords de fuite 14,14' du carénage 3 en étant entraînés en rotation par la motorisation 16 suivant un sens et une vitesse de rotation déterminés par les moyens de commande 17 en fonction des effets produits par le premier flux d'air 7 sur l'écoulement du deuxième flux d'air 8,8' le long de l'une au moins des dites parois extérieures arrière 9,11 du giravion 1.

On relèvera que les rouleaux à aubes 21,21' sont entraînées en rotation d'une part suivant des sens de rotation respectifs opposés l'un par rapport à l'autre et d'autre part à des vitesses de rotation propres potentiellement différentes.

De plus tels que représentés à la figure 5, de tels rouleaux à aubes 21,21' peuvent comporter des aubes 46 orientées parallèlement aux axes de rotation 45,45' de ces rouleaux à aubes 21, 21'.

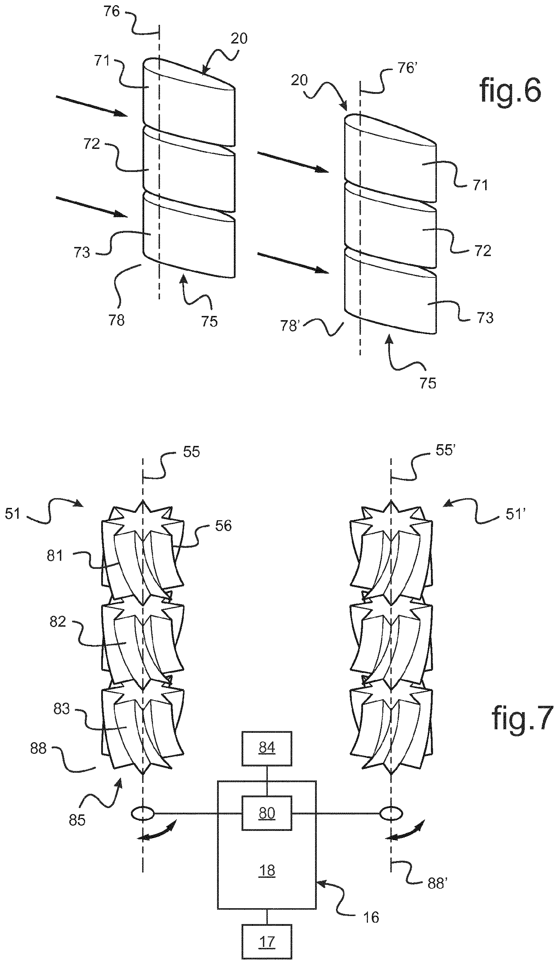

Selon une autre variante telle que représentée à la figure 7, un organe mobile 85 peut également être agencé en rouleaux à aubes 51,51' comportant des aubes 56 agencées respectivement en hélice autour d'un axe de rotation 55,55' de ces rouleaux à aubes 51, 51'.

Par ailleurs selon les exemples de réalisation tels que représentés aux figures 6 et 7, les organes mobiles 75,85 peuvent également être subdivisés en tronçons successifs 71-73,81-83 agencés le long de l'axe de rotation 76,76',55,55' au niveau d'au moins un bord de fuite 78,78',88,88' du carénage 3.

De plus, un tel organe mobile 75 peut, tel que représenté, être monté libre en mobilité le long d'un des bords de fuite 78, 78'. Dans ce cas, le flux d'air 7 est spontanément guidé vers l'arrière du giravion 1 sous l'effet de la prise au vent de l'organe mobile 75.

Par ailleurs tel que représenté à la figure 7, le moteur 18 comporte un mécanisme d'embrayage-débrayage 80 actionné par un homme au moyen d'un organe de commande 84. Un tel organe de commande 84 permet en effet de générer un ordre de débrayage qui est alors transmis au mécanisme d'embrayage-débrayage 80 lorsque par exemple le pilote du giravion souhaite ponctuellement que le flux d'air 7 soit spontanément guidé vers l'arrière du giravion 1 sous l'effet de la prise au vent de l'organe mobile 85.

Plus particulièrement sur les figures .2 à 5 et 7, les moyens de commande 17 régulent le fonctionnement de ladite motorisation 16 pour manoeuvrer l'organe mobile 15, 65, 85 selon les besoins.

De tels besoins sont identifiés par une instrumentation de bord 22 du giravion détectant les effets produits par le premier flux d'air 7 sur l'écoulement du deuxième flux d'air 8,8' le long de l'une au moins des parois extérieures arrière 9, 11 du giravion 1 représentées sur la fig.1, et notamment le long de la paroi extérieure 11 de la dérive de l'empennage arrière 12.

Les moyens de commande 17 comprennent préférentiellement un calculateur 23 de régulation automatisée dudit au moins un moteur 18 et un moyen de régulation 24 prioritaire de la motorisation 16 par application d'une commande manuelle.

La notion de « commande manuelle » est bien évidemment comprise à contrario d'une « commande automatisée ».

Ledit moyen de régulation 24 met notamment en oeuvre un organe manuel de commande 25 activable par le pilote humain du giravion pour générer des ordres de commande 26 régulant le fonctionnement de la motorisation 16.

Les informations transmises aux moyens de commande 17 par l'instrumentation de bord 22 du giravion comprennent potentiellement, isolément ou en combinaison, diverses informations représentatives d'une perturbation du deuxième flux d'air 8,8' par le premier flux d'air 7.

Il est par exemple proposé de prendre en compte les phénomènes vibratoires propres à un empennage arrière 12 du giravion 1, tel que la dérive de l'empennage arrière 12, ou en d'autres termes les vibrations auxquelles est soumis ledit empennage arrière 12 excluant les phénomènes vibratoires auxquels est globalement soumis le giravion 1.

Plus particulièrement, les informations fournies aux moyens de commande 17 par l'instrumentation de bord 22 du giravion 1 comprennent une première information 27 relative aux mouvements vibratoires propres de la paroi extérieure arrière 11 de l'empennage arrière 12.

La première information 27 est générée par une unité de calcul 28 que comprend l'instrumentation de bord 22 du giravion 1 à partir de données 29 fournies par au moins un groupe d'instruments de bord du giravion 1.

Par exemple, la première information 27 est potentiellement déterminée par l'instrumentation de bord 22 à partir de données 29 fournies par un premier groupe 30 d'instruments de bord comprenant un premier accéléromètre 31 implanté en zone du centre de gravité du giravion 1 et un deuxième accéléromètre 32 équipant la paroi extérieure arrière 11 du giravion 1.

Par exemple encore, la première information 27 est potentiellement déterminée par l'instrumentation de bord 22 à partir de données 29 fournies par un deuxième groupe 33 d'instruments de bord comprenant un gyroscope 34 exploité par un système de contrôle actif 35 des vibrations auxquelles est soumis le giravion 1. Le deuxième groupe 33 d'instruments de bord comprend aussi un troisième accéléromètre 36 équipant la paroi extérieure arrière 11 du giravion 1, tel que constitué dudit deuxième accéléromètre 32.

Il est par exemple encore proposé de prendre en compte par l'instrumentation de bord 22 la phase de vol courante du giravion 1, telle que par exemple une phase d'approche par le giravion d'un point de posé, susceptible d'influer sur l'orientation de l'écoulement du premier flux d'air 7 vers l'arrière du giravion 1.

A cet effet, l'instrumentation de bord 22 est potentiellement génératrice d'une deuxième information 37 relative à la phase de vol courante du giravion 1, ladite deuxième information 37 étant potentiellement générée par une unité de commande de vol 38 et/ou par un pilote automatique 39 équipant le giravion 1.

Des informations 40 complémentaires peuvent être fournies par des capteurs de pression 41, 41' respectivement implantés sur le carénage 3 et sur le bord d'attaque de la dérive arrière de l'empennage arrière 12 pour procurer aux moyens de commande 17 des informations 40 relatives aux excitations subies respectivement par le carénage 3 et par la dérive arrière de l'empennage arrière 12 sous l'effet d'une instabilité de l'écoulement d'air le long de leurs parois.

Les moyens de commande 17 sont aptes à réguler la mise en oeuvre dudit au moins un moteur 18 selon des modes de régulation 42 prédéfinis sélectionnés par les moyens de commande 17 et notamment par ledit calculateur 23, en fonction des informations 27, 37, 40 fournies par l'instrumentation de bord 22. Bien évidemment, de tels modes de régulation 42 prédéfinis sont stockés dans des moyens de mémoire 43 intégrés aux moyens de commande 17 en étant associés audit calculateur 23.

Dans ce contexte, il est préféré d'intégrer dans les moyens de commande 17 des moyens de correction 44 par calcul de la régulation dudit au moins un moteur 18 opérée par les moyens de commande 17, notamment par application desdits modes de régulation 42 prédéfinis. Lesdits moyens de correction 44 sont notamment du type mettant en oeuvre des filtres de Kalman ou un système de calcul expert analogue, permettant de corriger la mise en oeuvre du ou des moteurs 18 par les moyens de commande 17 en fonction de la variation des effets produits par la manoeuvre de l'organe mobile 15, 65, 85 sur l'écoulement du deuxième flux d'air 8,8'.

## Revendications

1. Giravion (1) muni à son sommet d'un carénage (3) longitudinalement étendu suivant l'orientation longitudinale (L) d'extension du giravion (1) définie entre l'avant et l'arrière du giravion (1) considéré posé au sol, ledit carénage (3) enveloppant un mécanisme de manoeuvre par un pilote du giravion (1) des pales d'un rotor principal (2) à axe sensiblement vertical procurant au moins la sustentation du giravion (1), ledit carénage (3) étant ménagé en contrebas de la voilure du rotor principal (2) et en rehausse d'un capot (4) enveloppant un groupe de motorisation du giravion (1), le profil du carénage (3) considéré dans un plan horizontal (P) du giravion (1) étant conformé en goutte d'eau, **caractérisé en ce que** ledit profil est tronqué avec une extrémité arrière comportant transversalement indifféremment une troncature (5) et/ou un plan incliné (6) ménageant deux bords de fuite (13,13'14,14',78,78',88,88') latéraux du carénage (3) chacun orienté transversalement audit plan horizontal (P) du giravion (1), chacun desdits deux bords de fuite (13,13',14,14',78,78',88,88') latéraux du carénage (3) étant muni d'au moins un organe mobile (15,65,75,85) comportant un degré de liberté en rotation par rapport au carénage (3) le long desdits deux bords de fuite (13,13',14,14',78,78',88,88'), ledit au moins un organe mobile (15,65,75,85) guidant un premier flux d'air (7) s'écoulant le long du carénage (3) et s'échappant d'un desdits deux bords de fuite (13,13',14,14',78,78',88,88') vers l'arrière du giravion (1) en vol.

2. Giravion selon la revendication 1,
**caractérisé en ce que** ledit organe mobile (75) est montée libre en mobilité le long d'un desdits deux bords de fuite (78,78') du carénage (3), le guidage aux bords de fuite (78,78') du carénage (3) dudit premier flux d'air (7) vers l'arrière du giravion (1) en vol étant spontanément provoqué sous l'effet de la prise au vent dudit au moins un organe mobile (75).

3. Giravion selon la revendication 1,
**caractérisé en ce que** ledit organe mobile (15,65,85) est motorisé en étant manoeuvrable par un moteur (18) dont la mise en oeuvre est placée sous dépendance d'informations (27,37,40) fournies par une instrumentation (22) de bord du giravion (1) et relatives au comportement en vol du giravion (1).

4. Giravion selon la revendication 3,
**caractérisé en ce que** la mise en oeuvre dudit moteur (18) est régulée par des moyens de commande (17) en fonction d'informations (27,37,40) fournies par une instrumentation de bord (22) du giravion (1) relatives aux effets produits par le premier flux d'air (7) sur l'écoulement d'un deuxième flux d'air (8,8') le long d'au moins une paroi extérieure arrière (9,11) du giravion (1) considérée en aval du carénage (3) dans le sens d'écoulement dudit premier flux d'air (7).

5. Giravion selon l'une quelconque des revendications 3 et 4,
**caractérisé en ce que** le moteur (18) est équipé d'un mécanisme d'embrayage-débrayage (80) dont la mise en oeuvre est placée sous la dépendance d'un ordre de débrayage généré par un organe de commande (84) activable par un homme.

6. Giravion selon l'une quelconque des revendications 1 à 5,
**caractérisé en ce que** ledit organe mobile (15,75) est agencé en volet (20) articulé en pivotement sur le carénage (3) le long d'un desdits deux bords de fuite (13,13',78,78').

7. Giravion selon l'une quelconque des revendications 1 à 5, **caractérisé en ce que** ledit organe mobile (65,85) est agencé en rouleau à aubes (21,21',51,51') monté tournant sur le carénage (3) le long d'un desdits deux bords de fuite (14,14',88,88').

8. Giravion selon les revendications 4 et 7,
**caractérisé en ce que** ledit rouleau à aubes (21,21',51,51') est manoeuvré par ledit moteur (18) conformément à une régulation par les moyens de commande (17) du sens et de la vitesse d'entraînement en rotation dudit rouleau à aubes (21,21',51,51').

9. Giravion selon l'une quelconque des revendications 7 et 8,
**caractérisé en ce que** les aubes (46) dudit rouleau à aubes (21,21') sont orientées parallèlement à un axe de rotation (45,45') du rouleau à aubes (21,21').

10. Giravion selon l'une quelconque des revendications 7 et 8,
**caractérisé en ce que** les aubes (56) dudit rouleau à aubes (51,51') sont agencées respectivement en hélice enroulée autour d'un axe de rotation (55,55') du rouleau à aubes (51,51').

11. Giravion selon l'une quelconque des revendications 1 à 10,
**caractérisé en ce que** le dit organe mobile (15,65) est un organe monobloc suivant un axe de rotation (45,45') dudit organe mobile (15,65).

12. Giravion selon l'une quelconque des revendications 1 à 10,
**caractérisé en ce que** le dit organe mobile (75,85) est subdivisé en tronçons successifs (71-73,81-83) suivant un axe de rotation (76,76',55,55') dudit organe mobile (75,85), lesdits tronçons (71-73,81-83) étant individuellement montés mobiles le long dudit au moins un bord de fuite (78,78',88,88') du carénage (3).

13. Giravion selon l'une quelconque des revendications 3 à 12,
**caractérisé en ce qu'**une motorisation (16) de l'organe mobile (15,65,85) est logée à l'intérieur du carénage (3), ladite motorisation (16) comprenant ledit moteur (18) et une chaîne cinématique (19) de transmission de mouvements interposée entre le moteur (18) et l'organe mobile (15,65,85).

14. Giravion selon l'une quelconque des revendications 3 à 13,
**caractérisé en ce que** le giravion (1) étant équipé d'un empennage arrière (12), la mise en oeuvre de l'organe mobile (15,65,85) par le moteur (18) est placée sous la dépendance des effets produits par le premier flux d'air (7) sur un dit deuxième flux d'air (8) s'écoulant le long dudit empennage arrière (12).

15. Giravion selon l'une quelconque des revendications 4 à 14,
**caractérisé en ce que** les moyens de commande (17) comprennent un calculateur (23) de régulation automatisée dudit moteur (18) en fonction desdites informations (27,37,40) fournies aux moyens de commande (17) par l'instrumentation de bord (22) du giravion.

16. Giravion selon l'une quelconque des revendications 4 à 15,
**caractérisé en ce que** les moyens de commande (17) comprennent un moyen de régulation (24) dudit moteur (18) en fonction d'ordres de commande (26) fournis par un organe manuel de commande (25) activable par un personnel d'équipage du giravion (1).

17. Giravion selon l'une quelconque des revendications 4 à 16,
**caractérisé en ce que** lesdites informations fournies aux moyens de commande (17) par l'instrumentation de bord (22) du giravion (1) comprennent une première information (27) relative aux mouvements vibratoires propres d'un empennage arrière (12) du giravion (1).

18. Giravion selon la revendication 17,
**caractérisé en ce que** la première information (27) est générée par l'instrumentation de bord (22) à partir de données fournies par l'un quelconque au moins des groupes (30,33) d'instruments de bord suivants :
-) un premier groupe (30) d'instruments de bord comprenant au moins un premier accéléromètre (31) implanté en zone avant du giravion (1) et au moins un deuxième accéléromètre (32) équipant un quelconque empennage arrière (12) du giravion (1) le long duquel s'écoule ledit deuxième flux d'air (8),
-) un deuxième groupe (33) d'instruments de bord comprenant au moins un gyroscope (34) équipant le giravion (1) et participant d'un système de contrôle actif (35) des vibrations auxquelles est soumis le giravion (1), ainsi qu'au moins un troisième accéléromètre (36) équipant un quelconque empennage arrière (12) du giravion (1) le long duquel s'écoule ledit deuxième flux d'air (8).

19. Giravion selon l'une quelconque des revendications 4 à 18,
**caractérisé en ce que** lesdites informations fournies par l'instrumentation de bord (22) du giravion (1) aux moyens de commande (17) comprennent une deuxième information (37) relative à une phase de vol courante du giravion (1) influant sur l'écoulement du premier flux d'air (7) vers l'arrière du giravion (1).

20. Giravion selon l'une quelconque des revendications 4 à 19,
**caractérisé en ce que** lesdites informations fournies par l'instrumentation de bord (22) du giravion (1) aux moyens de commande (17) comprennent des données générées par des capteurs de pression, dont :
-) au moins un premier capteur de pression (41) équipant le carénage (3) et participant à l'identification des caractéristiques du premier flux d'air (7), ainsi que
-) au moins un deuxième capteur de pression (41') équipant le bord d'attaque dudit empennage arrière (12) et participant à l'identification des caractéristiques du deuxième flux d'air (8).

21. Giravion selon l'une quelconque des revendications 4 à 20,
**caractérisé en ce que** les moyens de commande (17) sont des moyens de régulation du moteur (18) selon des modes de régulation (42) prédéfinis mis en oeuvre en fonction des informations (27,37,40) fournies par l'instrumentation de bord (22) du giravion (1).

22. Giravion selon l'une quelconque des revendications 4 à 21,
**caractérisé en ce que** les moyens de commande (17) intègrent des moyens de correction (43) par calcul de la régulation du moteur (18) opérée par les moyens de commande (17) à partir des informations (27,37,40) fournies par l'instrumentation de bord (22) du giravion (1), lesdits moyens de correction (43) adaptant la régulation du moteur (18) en fonction de la variation des effets produits par l'organe mobile (15) sur l'écoulement du deuxième flux d'air (8,8') le long de ladite au moins une paroi extérieure arrière (9,11) du giravion (1).

## Patentansprüche

1. Drehflügelflugzeug (1), das an seiner Spitze mit einer Verkleidung (3) versehen ist, die sich entlang der Längserstreckung (L) des Drehflügelflugzeugs (1) längs erstreckt, wobei die Längserstreckung (L) zwischen dem vorderen Teil und dem hinteren Teil des Drehflügelflugzeugs (1), von dem angenommen wird, dass es auf dem Boden ruht, definiert ist, wobei die Verkleidung (3) einen Mechanismus zur Betätigung von Rotorblätter eines Hauptrotors (2) mit im Wesentlichen vertikaler Achse, der mindestens den Auftrieb des Drehflügelflugzeugs (1) liefert, durch einen Piloten des Drehflügelflugzeugs (1), umhüllt, wobei die Verkleidung (3) unterhalb der Flügel des Hauptrotors (2) und als Aufsatz auf einer Haube (4), die eine Antriebseinheit des Drehflügelflugzeugs (1) umgibt, angeordnet ist, wobei der Querschnitt der Verkleidung (3) in einer horizontalen Ebene (P) des Drehflügelflugzeugs (1) die Form eines Wassertropfens hat,
**dadurch gekennzeichnet, dass** das Profil abgeschnitten ist, mit einem hinteren Ende, das in Quernchtung gleichermaßen eine Abstumpfung (5) und/oder eine geneigte ebene Fläche (6) aufweist, die zwei seitliche Hinterkanten (13, 13', 14, 14', 78, 78', 88, 88') der Verkleidung (3) bildet, die jeweils quer zur horizontalen Ebene (P) des Drehflügelflugzeugs (1) angeordnet sind, wobei jede der beiden seitlichen Hinterkanten (13, 13', 14, 14', 78, 78', 88, 88') der Verkleidung (3) mit mindestens einem beweglichen Element (15, 65, 75, 85) versehen ist, das einen Rotationsfreiheitsgrad bezüglich der Verkleidung (3) entlang der beiden Hinterkanten (13, 13', 14, 14', 78, 78', 88, 88') aufweist, wobei das mindestens eine bewegliche Element (15, 65, 75, 85) eine erste Luftströmung (7) führt, die entlang der Verkleidung (3) strömt und von einer der beiden Hinterkanten (13, 13', 14, 14', 78, 78', 88, 88') während des Fluges zum hinteren Ende des Drehflügelflugzeugs (1) entweicht.

2. Drehflügelflugzeug nach Anspruch 1,
**dadurch gekennzeichnet, dass** das mobile Element (75) frei beweglich entlang einer der beiden Hinterkanten (78, 78') der Verkleidung (3) montiert ist, wobei die Rührung der ersten Luftströmung (7) zum hinteren Teil des Drehflügelflugzeugs (1) während des Fluges an den Hinterkanten (78, 78') der Verkleidung (3) spontan unter der Einwirkung des Windwiderstands des mindestens einen mobilen Elements (75) bewirkt wird.

3. Drehflügelflugzeug nach Anspruch 1,
**dadurch gekennzeichnet, dass** das mobile Element (15, 65, 85) angetrieben wird, indem es durch einen Motor (18) betätigbar ist, dessen Betrieb abhängig gemacht wird von Informationen (27, 37, 40), die von einer Bordinstrumentierung (22) des Drehflügelflugzeugs (1) geliefert werden und die das Flugverhalten des Drehflügelflugzeugs (1) betreffen.

4. Drehflügelflugzeug nach Anspruch 3,
**dadurch gekennzeichnet, dass** der Betrieb des Motors (18) von Steuerungsmitteln (17) in Abhängigkeit von Informationen (27, 37, 40) geregelt wird, die von einer Bordinstrumentierung (22) des Drehflügelflugzeugs (1) bezüglich Wirkungen geliefert werden, die von der ersten Luftströmung (7) auf das Strömen einer zweiten Luftströmung (8, 8') entlang mindestens einer hinteren Außenwand (9, 11) des Drehflügelflugzeugs (1) erzeugt werden, betrachtet stromabwärts von der Verkleidung (3) in Strömungsrichtung der ersten Luftströmung (7).

5. Drehflügelflugzeug nach einem der Ansprüche 3 und 4,
**dadurch gekennzeichnet, dass** der Motor (18) mit einem Einkuppel-/Auskuppelmechanismus (80) ausgerüstet ist, dessen Betrieb unter die Abhängigkeit von einem Auskuppelbefehl gestellt wird, der von einem durch einen Menschen aktivierbaren Steuerorgan (84) erzeugt wird.

6. Drehflügelflugzeug nach einem der Ansprüche 1 bis 5,
**dadurch gekennzeichnet, dass** das mobile Element (15, 75) mit einem Scharnier (20) entlang einer der beiden Hinterkanten (13, 13', 78, 78') verschwenkbar auf der Verkleidung (3) angelenkt ist.

7. Drehflügelflugzeug nach einem der Ansprüche 1 bis 5,
**dadurch gekennzeichnet, dass** das bewegliche Element (65, 85) mit Schaufelrädern (21, 21', 51, 51') ausgerüstet ist, die drehbar auf der Verkleidung (3) entlang der beiden Hinterkanten (14, 14', 88, 88') montiert sind.

8. Drehflügelflugzeug nach den Ansprüchen 4 und 7,
**dadurch gekennzeichnet, dass** das Schaufelrad (21, 21', 51, 51') von dem Motor (18) in Übereinstimmung mit einer Regelung durch die Steuerungsmittel (17) der Drehrichtung und der Drehantriebsgeschwindigkeit des Schaufelrads (21, 21', 51, 51') angetrieben wird.

9. Drehflügelflugzeug nach einem der Ansprüche 7 und 8,
**dadurch gekennzeichnet, dass** die Schaufeln (46) des Schaufelrads (21, 21') parallel zu einer Drehachse (45, 45') des Schaufelrads (21, 21') angeordnet sind.

10. Drehflügelflugzeug nach einem der Ansprüche 7 und 8,
**dadurch gekennzeichnet, dass** die Schaufeln (56) des Schaufelrads (51, 51') jeweils wendelförmig um eine Drehachse (55, 55') des Schaufelrads (51, 51') gewickelt angeordnet sind.

11. Drehflügelflugzeug nach einem der Ansprüche 1 bis 10,
**dadurch gekennzeichnet, dass** das mobile Element (15, 65) ein entlang einer Drehachse (45, 45') des mobilen Elements (15, 65) einstückig ausgebildetes Element ist.

12. Drehflügelflugzeug nach einem der Ansprüche 1 bis 10,
**dadurch gekennzeichnet, dass** das bewegliche Element (75, 85) in aufeinanderfolgende Abschnitte (71-73, 81-83) entlang einer Drehachse (76, 76', 55, 55') des beweglichen Elements (75, 85) unterteilt ist, wobei die Abschnitte (71-73, 81-83) einzeln beweglich entlang der mindestens einen Hinterkante (78, 78', 88, 88') der Verkleidung (3) montiert sind.

13. Drehflügelflugzeug nach einem der Ansprüche 3 bis 12,
**dadurch gekennzeichnet, dass** ein Antrieb (16) des beweglichen Elements (15, 65, 85) im Inneren der Verkleidung (3) gelagert ist, wobei der Antrieb (16) den Motor (18) und einen Bewegungsübertragungsstrang (19), der zwischen dem Motor (18) und dem beweglichen Element (15, 65, 85) angeordnet ist, aufweist.

14. Drehflügelflugzeug nach einem der Ansprüche 3 bis 13,
**dadurch gekennzeichnet, dass** das Drehflügelflugzeug (1) mit einem hinteren Leitwerk (12) ausgerüstet ist, wobei der Antrieb des beweglichen Elements (15, 65, 85) durch den Motor (18) unter die Abhängigkeit von Wirkungen gestellt wird, die durch die erste Luftströmung (7) auf die zweite Luftströmung (8), die entlang des hinteren Leitwerks (12) strömt, erzeugt werden.

15. Drehflügelflugzeug nach einem der Ansprüche 4 bis 14,
**dadurch gekennzeichnet, dass** die Steuerungsmittel (17) einen Rechner (23) zur automatischen Regelung des Motors (18) in Abhängigkeit von den Informationen (27, 37, 40) aufweisen, die den Steuerungsmitteln (17) von der Bordinstrumentierung (22) des Drehflügelflugzeugs geliefert werden.

16. Drehflügelflugzeug nach einem der Ansprüche 4 bis 15,
**dadurch gekennzeichnet, dass** die Steuerungsmittel (17) ein Regelungsmittel (24) des Motors (18) in Abhängigkeit von Steuerbefehlen (26), die von einem manuellen Betätigungsorgan (25) geliefert werden, das von einer Person der Besatzung des Drehflügelflugzeugs (1) betätigbar ist, aufweisen.

17. Drehflügelflugzeug nach einem der Ansprüche 4 bis 16,
**dadurch gekennzeichnet, dass** die an die Steuerungsmittel (17) von der Bordinstrumentierung (22) des Drehflügelflugzeugs (1) gelieferten Informationen eine erste Information (27) bezüglich Eigenschwingungsbewegungen eines hinteren Leitwerks (12) des Drehflügelflugzeugs (1) umfassen.

18. Drehflügelflugzeug nach Anspruch 17,
**dadurch gekennzeichnet, dass** die erste Information (27) durch die Bordinstrumentierung (22) ausgehend von Daten erzeugt wird, die von irgendeiner mindestens der folgenden Bordinstrumentierungsgruppen (30, 33) geliefert werden:
-) einer ersten Bordinstrumentierungsgruppe (30), die mindestens einen ersten Beschleunigungsmesser (31) aufweist, der im vorderen Bereich des Drehflügelflugzeugs (1) eingebaut ist, und mindestens einen zweiten Beschleunigungsmesser (32), mit dem mindestens ein beliebiges hinteres Leitwerk (12) des Drehflügelflugzeugs (1), entlang dem die zweite Luftströmung (8) strömt, ausgerüstet ist,
-) einer zweiten Bordinstrumentierungsgruppe (33), die mindestens ein Gyroskop (34) aufweist, mit dem das Drehflügelflugzeug (1) ausgerüstet ist und das an einem aktiven Steuersystem (35) von Schwingungen teilnimmt, denen das Drehflügelflugzeug (1) ausgesetzt ist, sowie mindestens einen dritten Beschleunigungsmesser (36), mit dem ein beliebiges hinteres Leitwerk (12) des Drehflügelflugzeugs (1) ausgerüstet ist, entlang dessen die zweite Luftströmung (8) strömt.

19. Drehflügelflugzeug nach einem der Ansprüche 4 bis 18,
**dadurch gekennzeichnet, dass** die von der Bordinstrumentierung (22) des Drehflügelflugzeugs (1) an die Steuerungsmittel (17) gelieferten Informationen eine zweite Information (37) bezüglich einer aktuellen Flugphase des Drehflügelflugzeugs (1) umfassen, die die Strömung der ersten Luftströmung (7) zum hinteren Teil des Drehflügelflugzeugs (1) beeinflusst.

20. Drehflügelflugzeug nach einem der Ansprüche 4 bis 19,
**dadurch gekennzeichnet, dass** die von der Bordinstrumentierung (22) des Drehflügelflugzeugs (1) an die Steuerungsmittel (17) gelieferten Informationen Daten umfassen, die von Drucksensoren erzeugt werden, von denen:
-) mindestens ein erster Drucksensor (41), mit dem die Verkleidung (3) ausgerüstet ist, zur Identifizierung von Eigenschaften der ersten Luftströmung (7) beiträgt, sowie
-) mindestens ein zweiter Drucksensor (41'), mit dem die Vorderkante des hinteren Leitwerks (12) ausgerüstet ist, zur Identifizierung von Eigenschaften der zweiten Luftströmung (8) beiträgt.

21. Drehflügelflugzeug nach einem der Ansprüche 4 bis 20,
**dadurch gekennzeichnet, dass** die Steuerungsmittel (17) Mittel zur Regelung des Motors (18) gemäß vordefinierten Regelungsmodi sind, die in Abhängigkeit von Informationen (27, 37, 40) ausgeführt werden, die von der Bordinstrumentierung (22) des Drehflügelflugzeugs (1) geliefert werden.

22. Drehflügelflugzeug nach einem der Ansprüche 4 bis 21,
**dadurch gekennzeichnet, dass** die Steuerungsmittel (17) Mittel (43) zur Korrektur durch Berechnung der Regelung des Motors (18) aufweisen, die von den Steuerungsmitteln (17) ausgehend von Informationen (27, 37, 40) betätigt werden, die von der Bordinstrumentierung (22) des Drehflügelflugzeugs (1) geliefert werden, wobei die Korrekturmittel (43) die Regelung des Motors (18) in Abhängigkeit von der Veränderung von Wirkungen anpassen, die von dem beweglichen Element (15) auf das Strömen der zweiten Luftströmung (8, 8') entlang der mindestens einen hinteren Außenwand (9, 11) des Drehflügelflugzeugs (1) erzeugt werden.

## Claims

1. A rotorcraft (1) provided on its top with a fairing (3) longitudinally extended in the longitudinal orientation (L) of extension of the rotorcraft (1) which is defined between the front and the rear of the rotorcraft (1) considered when on the ground, said fairing (3) covering a mechanism enabling a pilot of the rotorcraft (1) to operate the blades of a main rotor (2) with a substantially vertical axis providing at least the lift for the rotorcraft (1), said fairing (3) being formed below the rotary wing of the main rotor (2) and above a cowling (4) covering a power plant of the rotorcraft (1), the profile of the fairing (3) considered in a horizontal plane (P) of the rotorcraft (1) being in the shape of a drop of water, **characterised in that** said profile is truncated with a rear end comprising transversely equally well a truncated portion (5) and/or an inclined plane (6) forming two lateral trailing edges (13, 13', 14, 14', 78, 78', 88, 88') of the fairing (3), each oriented transversely to said horizontal plane (P) of the rotorcraft (1),
each of said two lateral trailing edges (13, 13', 14, 14', 78, 78', 88, 88') of the fairing (3) being provided with at least one mobile member (15, 65, 75, 85) having a degree of freedom in rotation relative to the fairing (3) along said two trailing edges (13, 13', 14, 14', 78, 78', 88, 88'), said at least one mobile member (15, 65, 75, 85) guiding a first airflow (7) flowing along the fairing (3) and escaping from one of said two trailing edges (13, 13', 14, 14', 78, 78', 88, 88') towards the rear of the rotorcraft (1) during flight.

2. A rotorcraft according to Claim 1,
**characterised in that** said mobile member (75) is mounted to move freely along one of said two trailing edges (78, 78') of the fairing (3), the guiding of said first airflow (7) at the trailing edges (78, 78') of the fairing (3) towards the rear of the rotorcraft (1) during flight being caused spontaneously under the effect of the wind resistance of said at least one mobile member (75).

3. A rotorcraft according to Claim 1,
**characterised in that** said mobile member (15, 65, 85) is motor-driven, being operable by a motor (18), the operation of which is placed under the control of information (27, 37, 40) supplied by onboard instrumentation (22) of said rotorcraft (1) and relating to the behaviour of the rotorcraft (1) during flight.

4. A rotorcraft according to Claim 3,
**characterised in that** the operation of said motor (18) is regulated by control means (17) as a function of information (27, 37, 40) supplied by onboard instrumentation (22) of the rotorcraft (1) relative to the effects produced by the first airflow (7) on the flow of a second airflow (8, 8') along at least one rear outer wall (9, 11) of the rotorcraft (1) considered downstream from the fairing (3) in the direction of flow of said first airflow (7).

5. A rotorcraft according to any one of Claims 3 and 4,
**characterised in that** the motor (18) is equipped with a clutching/declutching mechanism (80), the operation of which is placed under the control of a declutching commande generated by a control member (84) which can be activated by a person.

6. A rotorcraft according to any one of Claims 1 to 5,
**characterised in that** said mobile member (15, 75) is arranged as a flap (20) mounted to pivot on the fairing (3) along one of said two trailing edges (13, 13', 78, 78').

7. A rotorcraft according to any one of Claims 1 to 5,
**characterised in that** said mobile member (65, 85) is arranged as a bladed roller (21, 21', 51, 51') mounted to rotate on the fairing (3) along one of said two trailing edges (14, 14', 88, 88').

8. A rotorcraft according to Claims 4 and 7,
**characterised in that** said bladed roller (21, 21', 51, 51') is operated by said motor (18) in accordance with regulation by the control means (17) for controlling the direction and the speed of driving said bladed roller (21, 21', 51, 51') in rotation.

9. A rotorcraft according to any one of Claims 7 and 8,
**characterised in that** the blades (46) of said bladed roller (21, 21') are oriented parallel to an axis of rotation (45, 45') of the bladed roller (21, 21').

10. A rotorcraft according to any one of Claims 7 and 8,
**characterised in that** the blades (56) of said bladed roller (51, 51') are respectively arranged in a helix wound about an axis of rotation (55, 55') of the bladed roller (51, 51').

11. A rotorcraft according to any one of Claims 1 to 10,
**characterised in that** said mobile member (15, 65) is a one-piece member following an axis of rotation (45, 45') of said mobile member (15, 65).

12. A rotorcraft according to any one of Claims 1 to 10,
**characterised in that** said mobile member (75, 85) is subdivided into successive sections (71-73, 81-83) following an axis of rotation (76, 76', 55, 55') of said mobile member (75, 85), said sections (71-73, 81-83) being individually mounted to move along said at least one trailing edge (78, 78', 88, 88') of the fairing (3).

13. A rotorcraft according to any one of Claims 3 to 12,
**characterised in that** a motor drive (16) for the mobile member (15, 65, 85) is housed within the fairing (3), said motor drive (16) comprising said motor (18) and a kinematic chain (19) for transmission of movements which is interposed between the motor (18) and the mobile member (15, 65, 85).

14. A rotorcraft according to any one of Claims 3 to 13,
**characterised in that**, the rotorcraft (1) being equipped with a tail unit (12), the operation of the mobile member (15, 65, 85) by the motor (18) is placed under the control of the effects produced by the first airflow (7) on a said second airflow (8) flowing along said tail unit (12).

15. A rotorcraft according to any one of Claims 4 to 14,
**characterised in that** the control means (17) comprise a computer (23) for automated regulation of said motor (18) as a function of said information (27, 37, 40) supplied to the control means (17) by the onboard instrumentation (22) of the rotorcraft.

16. A rotorcraft according to any one of Claims 4 to 15,
**characterised in that** the control means (17) comprise a means (24) for regulation of said motor (18) as a function of control commands (26) provided by a manual control member (25) which can be activated by a member of the crew of the rotorcraft (1).

17. A rotorcraft according to any one of Claims 4 to 16,
**characterised in that** said information supplied to the control means (17) by the onboard instrumentation (22) of the rotorcraft (1) comprises a first item of information (27) relative to the inherent vibratory movements of a tail unit (12) of the rotorcraft (1).

18. A rotorcraft according to Claim 17,
**characterised in that** the first item of information (27) is generated by the onboard instrumentation (22) based on data supplied by any one at least of the following groups (30, 33) of onboard instruments:
-) a first group (30) of onboard instruments comprising at least a first accelerometer (31) installed in the forward zone of the rotorcraft (1) and at least a second accelerometer (32) fitted in any tail unit (12) of the rotorcraft (1) along which said second airflow (8) flows,
-) a second group (33) of onboard instruments comprising at least one gyroscope (34) fitted in the rotorcraft (1) and forming part of an active control system (35) for controlling the vibrations to which the rotorcraft (1) is subjected, and also at least a third accelerometer (36) fitted in any tail unit (12) of the rotorcraft (1) along which said second airflow (8) flows.

19. A rotorcraft according to any one of Claims 4 to 18,
**characterised in that** said information supplied to the control means (17) by the onboard instrumentation (22) of the rotorcraft (1) comprises a second item of information (37) relating to a current flight phase of the rotorcraft (1) influencing the flow of the first airflow (7) towards the rear of the rotorcraft (1).

20. A rotorcraft according to any one of Claims 4 to 19,
**characterised in that** said information supplied to the control means (17) by the onboard instrumentation (22) of the rotorcraft (1) comprises data generated by pressure sensors, of which:
-) at least a first pressure sensor (41) fitted in the fairing (3) and which contributes to identifying characteristics of the first airflow (7), and also
-) at least a second pressure sensor (41') fitted in the leading edge of said tail unit (12) and which contributes to identifying characteristics of the second airflow (8).

21. A rotorcraft according to any one of Claims 4 to 20,
**characterised in that** the control means (17) are regulating means for regulating the motor (18) according to predefined regulation modes (42) which are implemented as a function of the information (27, 37, 40) supplied by the onboard instrumentation (22) of the rotorcraft (1).

22. A rotorcraft according to any one of Claims 4 to 21,
**characterised in that** the control means (17) incorporate means (43) for correction by calculation of the regulation of the motor (18) which is performed by the control means (17) based on the information (27, 37, 40) supplied by the onboard instrumentation (22) of the rotorcraft (1), said correction means (43) adapting the regulation of the motor (18) as a function of the variation of the effects produced by the mobile member (15) on the flow of the second airflow (8, 8') along said at least one rear outer wall (9, 11) of the rotorcraft (1).
